(19) **Europäisches Patentamt**
**European Patent Office**
**Office européen des brevets**

(11) **EP 1 737 914 B1**

(12) **EUROPEAN PATENT SPECIFICATION**

(45) Date of publication and mention
of the grant of the patent:
**19.09.2007 Bulletin 2007/38**

(51) Int Cl.:
*C08L 95/00* (2006.01)     *C08L 53/02* (2006.01)

(21) Application number: **05747185.6**

(22) Date of filing: **11.04.2005**

(86) International application number:
**PCT/EP2005/051593**

(87) International publication number:
**WO 2005/100479 (27.10.2005 Gazette 2005/43)**

(54) **A POLYMER MODIFIED BITUMEN COMPOSITION TO BE USED IN ASPHALT BINDERS OR ROOFING COMPOSITIONS**

POLYMERMODIFIZIERTE BITUMENZUSAMMENSETZUNG ZUR VERWENDUNG IN ASPHALTBINDERN ODER DACHABDECKUNGSMASSEN

COMPOSITION DE BITUME MODIFIEE PAR POLYMERE, UTILISABLE DANS DES LIANTS ROUTIERS OU COMME COMPOSITIONS DE TOITURE

(84) Designated Contracting States:
**DE FR GB IT NL**

(30) Priority: **14.04.2004 EP 04101527**
        **30.06.2004 EP 04103061**

(43) Date of publication of application:
**03.01.2007 Bulletin 2007/01**

(73) Proprietor: **KRATON Polymers Research B.V.**
**1030 BH Amsterdam (NL)**

(72) Inventors:
 • **KORENSTRA, J.,**
 **KRATON Polymers Res. B.V.**
 **NL-1031 CM Amsterdam (NL)**
 • **VONK, W.C.,**
 **KRATON Polymers Research B.V.**
 **NL-1031 CM Amsterdam (NL)**
 • **VAN DIJK, C.M.,**
 **KRATON Polymers Res. B.V.**
 **NL-1031 CM Amsterdam (NL)**
 • **TROMMELEN, E.A.T,**
 **KRATON Polymers Research B.V.**
 **NL-1031 CM Amsterdam (NL)**
 • **BODT, D.,**
 **KRATON Polymers Research B.V.**
 **NL-1031 CM Amsterdam (NL)**

(74) Representative: **Kortekaas, Marcel C.J.A. et al**
**Exter Polak & Charlouis B.V.**
**Postbus 3241**
**2280 GE Rijswijk (NL)**

(56) References cited:
**DE-U- 20 310 484        GB-A- 2 318 121**
**US-A- 5 773 496        US-A- 6 150 439**

 • **MCKAY K W ET AL: "THE INFLUENCE OF STYRENE-BUTADIENE DIBLOCK COPOLYMER ON STYRENE-BUTADIENE-STYRENE TRIBLOCK COPOLYMER VISCOELASTIC PROPERTIES AND PRODUCT PERFORMANCE" JOURNAL OF APPLIED POLYMER SCIENCE, JOHN WILEY AND SONS INC. NEW YORK, US, vol. 56, no. 8, 23 May 1995 (1995-05-23), pages 947-958, XP000535273 ISSN: 0021-8995 cited in the application**

EP 1 737 914 B1

## Description

### Technical Field

The present invention relates to asphalt binders based on Polymer Modified Bitumen (PMB's), as well as Hot Mix Asphalt (HMA) based on asphalt binders and mineral aggregate, in particular gap-graded aggregate, as well as pavements made from said HMA's.

Another aspect of the present invention is formed by bituminous roofing compositions, comprising said Polymer Modified Bitumen Compositions (PMB's) and easy welding roll roofing membranes, comprising said roofing compositions and a reinforcing mat.

Still another aspect is formed by specifically preferred novel block copolymers for use in the PMB's.

### Background Art

According to the Transportation Research Board the most common type of flexible pavement surfacing in the U.S. is hot mix asphalt (HMA). Hot mix asphalt is known by many different names such as hot mix, asphalt, or blacktop. HMA consists of two basic ingredients: aggregate and asphalt binder (bitumen).

Asphalt binders nowadays often comprise a mixture of bitumen and polymer. Of these polymers, the thermoplastic rubbers forming a continuous network are the most commonly used polymers, and have led to various papers on the subject matter. In MCKAY, Kevin W. The Influence of Styrene-Butadiene Diblock Copolymer on Styrene-Butadiene-Styrene Triblock Copolymer Viscoelastic Properties and Product Performance. J. appl. polym. sci., 1995 vol. 56, p. 947-958. ISSN 0021-8995. , for instance, the effects of SB diblock copolymer on the complex shear modulus and elasticity of a polymer-modified asphalt is described, with a predicted lack of network participation for the SB diblock, accounting for lower strength and greater temperature susceptibility of diblock-containing systems. This article hence suggests a departure from diblock containing asphalt binders.

In US 4196115 (PHILIPS). 1980-04-01. blends are described of different conjugated diene/monovinyl aromatic copolymers in bituminous based roofing and waterproofing membranes. Thus a radial conjugated diene/monovinyl aromatic copolymer having a weight average molecular weight (Mw) above 200,000 and a conjugated diene/monovinyl aromatic ratio of 50/50 to 85/15 is used together with a conjugated diene/monovinyl aromatic copolymer having an Mw below 200,000 and being radial or linear, with same conjugated diene/monovinyl aromatic weight ratios as earlier given, in an asphalt-containing composition to yield desirable high as well as low temperature properties. It is suggested that the high Mw copolymer contributes to the high temperature stability, e.g., low or no flow between 25°-100°C and that the low Mw copolymer contributes to low temperature flexibility, e.g., no cracking at -25°C.

There are numerous examples of asphalt binders to be found in the patent literature. US 5863971 (SHELL). 1999-01-26. provides a process for preparing a bitumen composition which comprises mixing at an elevated temperature an oxidised bitumen having a penetration index of at least 0 with a thermoplastic rubber which is present in an amount of less than 5% wt., based on total bitumen composition. It further provides bitumen compositions obtainable by such process; and the use of such bitumen compositions in asphalt mixtures for road applications

US 5773496 (KOCH). 1998-06-30. and US 5795929 (KOCH). 1998-O8-18. relate to an asphalt composition prepared from bitumen (asphalt), linear and non-linear copolymers of styrene and butadiene, further comprising respectively cross-linking agents, and emulsifiers ('929) or elemental sulphur ('496). The asphalt polymer compositions are useful for industrial applications, such as hot-mix and emulsified asphalts used with aggregates for road paving, and repair.

US 6150439 (JAPAN ELASTOMER CO). 2000-11-21. claims a block copolymer composition for modifying asphalt, which comprises a mixture of: (A) a block copolymer comprising: at least two polymer blocks each mainly comprising a monoalkenyl aromatic compound; and at least one polymer block mainly comprising a conjugated diene compound; and (B) a block copolymer comprising: at least one polymer block mainly comprising a monoalkenyl aromatic compound; and at least one copolymer block mainly comprising a conjugated diene compound, and having a molecular weight equivalent to 1/3 to 2/3 of the molecular weight of block copolymer (A), wherein (a) the total bonding alkenyl aromatic compound content in the mixture of block copolymers (A) and (B) is from 10 to 50% by weight, wherein (b) the vinyl bond content in the conjugated diene polymer blocks is not greater than 70% by weight, and wherein the block copolymer composition has: (c) a content of (A) component of from 98 to 20% by weight and a content of (B) component of from 2 to 80% by weight; (d) a melt index value of from 0.3 to 15.0 g/10 min; (e) a bulk density of from 0.1 to 0.7; (f) a particle size distribution such that the content of constituents remaining on a 5-mesh sieve is not greater than 30% by weight and the content of constituents passing through a 20-mesh sieve is not greater than 30% by weight; and (g) a total pore volume of from 100 to 2,000 mm$^3$/g.

Further patent applications by the same applicant and/or inventor include JP 10212416 (NIPPON ELASTOMER KK). 1998-08-11. , which has as its problem to be solved: To obtain an asphalt composition manifesting high softening point, excellent in mechanical strengths, processability and storing stability and suitable for road paving by compounding a specific amount of a composition of a block copolymer of an alkenyl aromatic compound having a specific structure and a conjugated diene. The proposed solution comprises the use of a composition consisting of (A) 3-15 parts of the block copolymer composition having 0.3-15.0 of melt flow index and 80-130 °C of softening point, (B) 85-97 parts of asphalt, wherein component (A) consists of 98-20wt.% of a block copolymer (A1) comprising a polymer block (R1) mainly consisting of at least two monoalkenyl aromatic compounds and a copolymer block (R2) mainly consisting of the conjugated diene polymer (X), and 2-80% of a block copolymer (A2) comprising R1 and R2 having peak molecular weight corresponding to 1/3-2/3 of (A1), the difference between total amount of alkenyl aromatic compounds (Z) and R1 content is 2-30%, the contents of Z and R1 are 10-50% respectively, the amount of vinyl bond in the X is 0-50%.

In JP 1254768 (NIPPON ELASTOMER KK). 1989-10-11. , JP 6041439 (NIPPON ELASTOMER KK). 1994-02-15. and JP 9012898 (NIPPON ELASTOMER KK). 1997-01-14. a similar asphalt composition is described comprising a block copolymer having a random copolymer block of the alkenyl aromatic compound and the conjugated diene polymer; or a mixture of a triblock copolymer and a diblock copolymer, respectively such block copolymers with a random copolymer block of the alkenyl aromatic compound and the conjugated diene polymer.

In JP 3143961 (ASAHI). 1991-06-19. an asphalt composition is described with excellent heat resistance and processability, and with an improved balance of properties such as softening point, rate of penetration, elongation, cohesive force and grasp of aggregate by using a composition comprising 30-95%wt of a styrenic block copolymer composition having a vinyl aromatic hydrocarbon content (S) of 10-35w%, a contents of vinyl bonds in the butadiene block (V) of 15-55% and satisfying the relation of $35 \leq S+V \leq 75$, and 5-70%wt of a block copolymer having a polyisoprene block.

In GB 2294935 (SHELL). 1996-05-15. and asphalt composition is described containing highly coupled radial block copolymers of a conjugated diolefin and a vinyl aromatic hydrocarbon.

In JP 8165436 (J S R SHELL ELASTOMER KK). 1996-06-25. and JP 8225711 (J S R SHELL ELASTOMER KK). 1996-09-03. asphalt compositions are described comprising a specific block copolymer expressed by general formulae: $(A_1-B_1)_nX$; $(A_1-B_1-A_5)_nX$; $A_2-B_2-A_2-B_2-A_6$; $(A_3-B_3)_nY$; $(A_3-B_3-A_7)_nY$; and $A_4-B_4-A_8-B_5$, wherein $A_1$ to $A_8$ are each a polymer block consisting essentially of an aromatic vinyl compound; $B_1$ to $B_5$ each represents a polymer block consisting essentially of a conjugated diene; X is the residue of a coupling agent; Y is a residue of a multifunctional monomer; and n is an integer of 1 to 6.

In US 6136899 (GOODYEAR). 2000-10-24. it has been determined that a specific type of emulsion SBR can be used to modify asphalt cement to greatly enhance the resistance to shoving, rutting and low temperature cracking of asphalt concretes made therewith. The SBR used for asphalt cement modification is a blend of (i) a high molecular weight styrene-butadiene rubber having a weight average molecular weight of at least about 300,000 and (ii) a low molecular weight styrene-butadiene rubber having a weight average molecular weight of less than about 280,000; wherein the ratio of the high molecular weight styrene-butadiene rubber to the low molecular weight styrene-butadiene rubber is within the range of about 80:20 to about 25:75; and wherein the bound styrene content of the high molecular weight styrene-butadiene rubber differs from the bound styrene content of the low molecular weight styrene-butadiene rubber by at least 5 percentage points. It should be realized, however, that SBR does not form continuous networks.

From DE 10330820 (KRATON). 2005-02-24. polymer modified bitumens were known showing improved elastic recovery, and pavements comprising them. Said bitumen compositions comprised: a block copolymer composition in a proportion of from 1 to 3 wt%, relative to the complete composition and comprising from 10 to 30 wt% of a poly(styrene)-poly (butadiene)-poly(styrene) triblock copolymer (A), having an average poly(styrene) content of 25 to 35 wt% and an apparent molecular weight of from 100,000 to 150,000, and from 90 to 70 wt% of a diblock copolymer poly(styrene)-poly (butadiene) (B), which has an average poly(styrene) content of 25-35 wt% and an apparent molecular weight, corresponding with 1/3 to 2/3 of the molecular weight of block copolymer A; and bitumen, having a penetration at 25°C of from 30 to 70 dmm, a Ring and Ball softening point of from 50 to 60°C, and an asphalt content of from 10 to 20 wt%.

Hot Mix Asphalts (HMA) are made by heating and blending the aggregate and asphalt binder, e.g., in a batch plant or a drum mix plant. During mixing, the hot asphalt binder must be readily able to coat the dried and heated mineral aggregate, given the shearing conditions employed, in a relatively short period of time (typically 30 to 90 seconds). Whilst the mixing temperature must be sufficiently high to allow rapid distribution of the asphalt binder on the aggregate, the use of the lowest temperature possible is advocated to avoid excessive oxidation of the bitumen. There are therefore upper and lower limits to mixing temperature. The material so produced is generally stored in silos before being discharged into trucks. So called "gap graded" HMA's commonly suffer from drainage or drain-down, a process in which the excess asphalt binder comes off the aggregates during storage or transport.

Until about 20 years ago asphalt mixes were dense and often had a continuous grading of aggregate to reduce the voids volume. Asphalt binder content was optimised to get the right balance of properties. This generally avoided the issue of drain-down or drainage of the asphalt binder. Also, adding filler helped avoiding the issue of drainage.

More recently, however, mixes have been developed that consist of a rather different aggregate grading. Some contain more voids deliberately for reasons of water drainage in service and noise reduction, while others are dense but gap-graded (no continuity in the aggregate grading). Examples of such gap-graded mixes are porous asphalt, based on so-called "open-graded" aggregate; stone mastic asphalt or stone matrix asphalt (SMA) based on so-called "gap-graded" material, and also (ultra) thin overlays are based on this concept. The gap-graded aggregate mixture provides a stable stone-to-stone skeleton, and through aggregate interlock and particle friction give the structure its stability. These HMA's are more prone to drain-down for reasons described below.

The present inventors set out to solve the problem of drain-down, without adversely affecting the processability of the HMA, while improving its performance in service

The maximum binder content of these open and gap graded mixes at which no drainage will take place is typically lower than what is desirable in use. For instance in porous asphalt the maximum would be at 3 to 3.5% by weight of asphalt binder. However, with their open structure this would result in excessive hardening of the binder and hence early brittle failure. It is desirable to increase the thickness of the binder films by increasing the asphalt binder content, which then leads to binder drainage during storage and transport. SMAs are mixes that are basically similar to porous asphalt, but instead of having excessive air voids, the voids are filled with mortar of asphalt binder, filler, sand and small aggregate. In these mixes too, storage and transport will lead to binder drainage if no counter measures are taken.

There are several ways to reduce or inhibit drainage. One way is to add fibres. Fibres can provide an excellent resistance to binder drainage, but do not contribute much to the overall performance of the mix.

Finally, the addition of polymers to the bitumen may reduce the drainage due to their increase in viscosity of the binder so-produced. However, there is obviously a limit to the amount of polymer, as it will not only reduce drainage, but will also make it more difficult to mix, lay and compact the mix.

The present inventors therefore set out to find an asphalt binder that does not suffer from drain-down, whilst maintaining processability at all stages of blending, mixing, laying and compaction using standard available equipment.

It will be appreciated that the present invention aims at providing a polymer modified bitumen composition, showing a pseudo-plastic or shear thinning behaviour, which means that the viscosity of the composition, significantly decreases under high shear rates (up to 120 sec$^{-1}$ at a temperature in the range of from 120 to 150°C).

As result of extensive research and experimentation said desired polymer modified bitumen composition was found. Moreover it has surprisingly been found that said polymer modified bitumen composition can also be advantageously applied as bituminous roofing composition and for easy welding roll roofing membranes, comprising said composition.

Asphalt is a common material utilized for the preparation of roofing membranes and coatings which may be applied as mopping grade asphalts, cutbacks in solvents, single ply membranes, shingles, roll roofing membranes, etc. While the material is suitable in many respects, it inherently is deficient in some physical properties which it would be highly desirable to improve. Efforts have been made in this direction by addition of certain conjugated diene rubbers, neoprene, resins, fillers and other materials for the modification of one or more of the physical properties of the asphalt binder. Each of these added materials modifies the asphalt in one respect or another but improvements to balance product performance are certainly desired. For example, some of them have excellent weather resistance, sealing and bonding properties but are often deficient with respect to warm tack, modulus, hardness and other physical properties.

Since the late 1960s, styrene-butadiene rubber and styrene-rubber block copolymers such as styrene-butadiene-styrene and styrene-isoprene-styrene block copolymers have been used to dramatically improve the thermal and mechanical properties of asphalts. Practical application of the rubber addition approach requires that the blended product retain improved properties and homogeneity during transportation, storage and processing. Long term performance of elastomer-modified asphalts also depends on the ability of the blend to maintain thermal and chemical stability.

To be suitable for synthetic roofing materials, the asphalt-block copolymer mixtures should meet the following requirements:

(a) sufficient resistance to flow at high temperatures,
(b) sufficient flexibility at low temperatures,
(c) workability according the convention methods used in the roofing technique,
(d) adequate hot storage stability,
(e) adequate hardness to prevent deformation during working traffic on the roof, and
(f) if it is to be used as an adhesive, sufficient tack and adhesive strength.

For roll roofing applications, it is preferred that the DIN flow resistance (the temperature at which the material will tend to flow) be above about 90 degree Centigrade, and that the cold bend temperature (the temperature at which the material will crack during application and service), should be below about -5 degree Centigrade. This temperature range is commonly referred to as the service temperature range. Wide service temperature ranges are desirable.

In addition the asphalt and block copolymer components should be able to be mixed and processed at a temperature preferably about 180 degree Centigrade to keep the asphalt heating costs down and to prevent possible adverse effects on the compound caused by too long storage at too high a temperature. Hot storage stability of the mix is indispensable for optimal processing flexibility (e.g., the hot mix should not degrade over weekend, resulting in inferior Monday morning material).

For roll roofing membranes, the bituminous composition is used to saturate and/or coat a reinforcing mat. The bitumen is there to make the membrane waterproof. The mat is used to aid in mechanical properties (gives the membrane strength, etc.) and for dimensional stability. Polymer is added to the asphalt to improve the weatherability, durability, rheological and mechanical properties of the asphalt.

Resistance to degradation under the application of heat at roof top temperatures is an important consideration in materials for roll roofing membranes. Roll roofing membranes are used, for example, to protect the surface of a roof. The membrane is rolled up and when applied, is merely unrolled in place on the roof. One application method to secure the membrane to the roof is torching, i.e. heating with a flame at a high temperature, while only melting the surface for proper welding. High performance roll roofing membranes which comprise a reinforcing mat coated with block copolymer modified asphalt must use a bituminous composition which flows sufficiently at these temperatures to ensure good application to the roof and watertight seam.

Thus, it can be seen that it would be highly advantageous to be able to produce a bitumen/polymer blend for roll roofing which has a wide service temperature range, which has improved hot storage stability and improved resistance to gelation and that can be applied using relatively inexpensive equipment (due to low viscosity, i.e., easy welding characteristics and good flow characteristics) but which is also elastic. The present invention provides such a composition.

**Disclosure of Invention**

Accordingly the present invention relates to a polymer modified bitumen composition, comprising 80 to 98.5 parts by weight of a bitumen and 20 to 1.5 parts by weight of a polymer composition, wherein the polymer composition comprises:

(i) from 5 to 70% by weight of a linear styrenic block copolymer (SBC1) comprising at least two polymer blocks each substantially made of an aromatic vinyl compound and at least one polymer block substantially made of a conjugated diene compound and having an apparent molecular weight greater than 250,000 and/or a radial styrenic block copolymer (SBC2) having three or more polymer arms attached to the residue of a cross-linking agent or multifunctional compound, comprising at least two polymer blocks each substantially made of an aromatic vinyl compound and at least one polymer block substantially made of a conjugated diene compound and wherein the polymer arms have an average apparent molecular weight greater than 125,000 and
(ii) from 95 to 30% by weight of an elastomer (E1) having an apparent molecular weight in the range of 120,000 to 250,000.

The polymer modified bitumen composition according to the present invention can be applied as asphalt binder for the manufacture of hot mix asphalt and pavement produced from open or gap-graded mixes comprising said asphalt binder, and for bituminous roofing compositions and easy welding roll roofing membranes.

In addition, the present invention relates to a hot mix asphalt, comprising 2 to 8 parts by weight of the asphalt binder of the present invention and 98 to 92 parts by weight aggregate material, preferably of gap-graded aggregate such as open gap-graded or dense gap-aggregate material.

Furthermore, the present invention relates to a pavement, produced from the open or gap-graded mixes, by compacting the hot mix asphalt mentioned above.

The present invention also relates to bituminous roofing compositions and easy welding roofing membranes derived from them, and to specific block copolymers to be applied therefore.

**Mode for the Invention**

The modification of bitumen by the addition of various polymers and elastomers is known. Such elastomers include polybutadiene, polyisoprene, conjugated diene copolymers, natural rubber, butyl rubber, chloroprene, random styrene-butadiene rubber, and styrene-butadiene diblock copolymers. In addition bitumen's have been modified with a special class of elastomers, so-called thermoplastic elastomers, which derive their strength and elasticity from a physical cross-linking of the molecules into three-dimensional networks. Of the four main groups of thermoplastic elastomers, polyurethane, polyether-polyester copolymers, olefinic copolymers and styrenic block copolymer, the latter have proved to be the thermoplastic elastomer with the greatest potential when blended with bitumen.

The present invention realizes sufficient processability of the asphalt binder at the mixing stage, with little or no drainage of the asphalt binder at the storage or transport stage and with sufficient workability at the compacting stage and realizes also improved processability of the bituminous roofing composition and adherence to the reinforcing mat.

Whilst achieving the aforementioned properties will greatly improve the future of open or porous asphalt for road construction, ideally these achievements should be obtained without adversely effecting or preferably even improving the properties of the final pavement. Thus, the softening point of the asphalt binder has been found to be important too. The present invention solves these problems by using a polymer composition comprising a high molecular weight styrenic block copolymer combined with a low molecular weight elastomer.

Preferably, the styrenic block copolymer has a molecular weight in the range of 250,000 to 800,000 if said copolymer is a linear polymer, or in the range of 500,000 to 1,500,000 if said copolymer is a branched or star-shaped polymer.

These preferred styrenic block copolymer constituents are selected from a larger group of styrenic block copolymers, that all may be used in the compositions of the present invention, consisting of those of the formulae

$$(B)_p\text{-}(A\text{-}B)_2 X; \text{ or } (B)_p\text{-}A(B\text{-}A)_n\text{-}(B)_p, \text{ (linear SBC1)}$$

$$((B)_p(A\text{-}B)_n)_m X \text{ (radial SBC2)}$$

wherein A represents the polymer block substantially made of an aromatic vinyl compound, typically a polystyrene block; B a polymer block substantially made of a conjugated diene, typically a polybutadiene block, n is an integer greater than or equal to 1, each p is independently 0 or 1, and X is the residue of a coupling agent or multifunctional monomer, and m is an integer greater than 2..

Most preferably the styrenic block copolymer constituents are selected from the group consisting of

$$A\text{-}B\text{-}A\text{-}(B)_p \text{ or } (A\text{-}B)_2 X \text{ (II)}$$

wherein A, B, p and X have the meaning set out above.

The expression "substantially" as used herein means that sufficient vinyl aromatic compound is used, for instance at least 50% by weight, to provide a hard block A having a glass transition temperature of greater than 25°C, whereas in terms of the block B the expression "substantially" means that sufficient conjugated diene is used, for instance at least 70% by weight, to provide an elastomer block having a glass transition temperature below 25°C.

The content of the vinyl aromatic compound in the styrenic block copolymer is from 10 to 50% by weight, preferably from 15 to 40% by weight.

The vinyl aromatic compound may be selected from compounds having 8 to 18 carbon atoms per molecule. For instance, some representative examples thereof include: styrene; 1-vinylnaphthalene; 3-methylstyrene; 3,5-diethylstyrene; 4-propylstyrene; 2,4,6-trimethylstyrene; 4-dodecylstyrene; 3-methyl,5-n-hexylstyrene; 4-phenylstyrene; 2-ethyl, 4-benzylstyrene; 2,3,4,5-tetraethylstyrene; 3-ethyl-1-vinylnaphthalene; alpha-methylstyrene, and the like. Preferred examples comprise 3-methylstyrene, styrene and mixtures thereof, styrene being most preferred. Compounds that may be copolymerized and form part of the A block(s) may be selected from the conjugated dienes hereafter, and other anionically polymerizable, ethylenically unsaturated compounds, such as vinylcyclohexane, methylmethacrylate and the like. Most preferably each polymer block A is a polystyrene block.

Block B is preferably made from butadiene, isoprene or mixtures thereof. Conjugated dienes that can be used, preferably having from 4 to 12 carbon atoms per molecule, further include 2,3-dimethyl-1,3-butadiene, piperylene, 3-butyl-1,3-octadiene, phenyl-1,3-butadiene, and the like. Said block(s) may also comprise other monomers, such as the vinyl aromatic compounds mentioned herein above. Most preferably block B is a polybutadiene block.

As is known, butadiene (and other conjugated dienes) may polymerise in 1,4-addition manner and/or 1,2-addition manner. The latter results in pending vinyl groups. It is known in the art to use styrenic block copolymers having relatively high vinyl content, e.g. up to 70% and higher (based on the conjugated diene), e.g. by polymerizing the conjugated diene monomer in the presence of a polar co-solvent and/or at a relatively cool polymerisation temperature. In producing the polymer block (B) under ordinary conditions a vinyl content of less than 25% is obtained. Both high vinyl and ordinary styrenic block copolymers may be used.

It will be appreciated that the particular advantageous properties of the polymer modified bitumen compositions according to the present invention seems to be caused by the application of the specific block copolymer compositions, characterized by a high molecular weight per arm in the triblock or multiarm block copolymer, a high total apparent molecular weight of the triblock or multiarm block copolymer and a high content of elastomer, e.g., accompanying diblock copolymer, having a relatively low molecular weight. Such a characteristic combination of block copolymer parameters was certainly not disclosed or suggested in any of the hereinbefore discussed prior documents.

Styrenic block copolymer (SBC1 and/or SBC2) and elastomer (E1) may be used in the following relative amounts: (SBC1 and/or SBC2) in an amount of at least 5%, preferably at least 10%, more preferably at least 15% and most preferably at least 20%, and up to at most 70%, preferably at most 50% by weight of), and accordingly (E1) in an amount of at most 95%, preferably at most 90%, more preferably at most 85% and most preferably at most 80%, and at least 30%, preferably at least 50%, all percentages by weight. Most preferably, the relative amounts are selected within the aforementioned range on the basis of some scouting experiments, to compensate for the effect of the molecular weights of these components and the effect of the bitumen.

Depending on their method of preparation these SBC's are known to comprise diblock copolymers of formula A-B in various amounts. Indeed, in coupling reactions, the diblock copolymers of formula A-B have the same molecular weight of the arms in the coupled polymer.

The co-produced diblock copolymer of formula A-B may be the low molecular weight elastomer (E1) component of the polymer composition, provided it has a molecular weight in the range of from 10,000 to 250.000 and is present in an amount in the range of 85 to 30% by weight basis the polymer composition. This is the preferred embodiment. The required, relatively high amount of diblock copolymer may be achieved by coupling the living diblock copolymers with a relatively low amount of coupling agent, or by using a very high amount of coupling agent (e.g., several times the equimolar amount, based on the amount of living diblock copolymers). On the other hand, elastomer (E1) may be a separate elastomer, selected from the elastomers mentioned herein before. Elastomer (E1) may also be a diblock copolymer produced independent of the preparation of the styrenic block copolymer (A).

The polymer composition that has been found to be most suitable for the present application is a linear high mol weight styrene-butadiene-styrene coupled block copolymer with a large amount of di-block, with the following characteristics:

> styrene content in the range of 25-40%, preferably about 30% by weight:
> diblock molecular weight 180,000-215,000, preferably about 200,000:
> diblock content 75-85%, preferably about 80% by weight (which corresponds with a coupling efficiency of 15-25, preferably about 20%);
> and comprising poly(styrene) blocks, having an apparent MW of from 30,000-40,000, preferably from 34,000 to 38,000, and having poly(butadiene) blocks having an apparent MW of from 300,000-350,000, and preferably from 320,000-330,000. The most preferred triblock copolymer component SBS has S blocks with a MW of preferably 36,000 and a B block with a MW of 328,000.

This polymer composition is different from existing block copolymers due to its high diblock content and very high molecular weight of the triblock.copolymer. It is therefore believed to be novel and forms another object of the present invention.

The new polymer composition may also find other end-uses. For instance it may be used in blends with thermoplastic polymers to improve the impact resistance of the polymer systems. Thermoplastics in particular are polystyrene and polyphenylene oxide, and poly(styrene-methylmethacrylate), and high impact polystyrene. Inclusion of the new polymer composition will improve toughness of these polymer systems. Also, the polymer composition can be used in sheet moulding compounds together with unsaturated polyester, styrene monomer, fillers, glass fibre, and peroxide crosslinker. The advantage of using the new polymer composition is to provide good shrink control of the sheet moulding compounds. The polymer composition and blends thereof may also find use in adhesive, sealant and coating compositions, in oil gels (e.g., as cable filling component) and in footwear. Finally, this new polymer composition is also an ideal component in the preparation of thermoplastic vulcanizites, i.e., elastomer-plastic blends comprising finely divided elastomer particles (here the new polymer composition) dispersed in a relatively small amount of plastic, made by dynamic vulcanization either in the presence of a curative system or without a curative system (cf.
CORAN, A.Y. "Thermoplastic Elastomers". LEGGE, N.R. Munich Vienna New York: Hanser Publishers, 1987. p. 133-161. ISBN 3446148272.
)

With the term "apparent molecular weight", as used throughout the present specification, is meant the molecular weight, as measured by means of Liquid High Performance Size Exclusion (LHPSEC), relative to commercially available poly(styrene) calibration standards (according to ASTM D 5296-97). One skilled in the art can readily convert "apparent" molecular weight to "real" or "true" molecular weight according to known compositionally dependent conversions. For example, a styrene/butadiene block copolymer having the structure $(S-B)_2X$ with an apparent molecular weight of $(36,000-164,000)_2X$ and 30 % by weight bound styrene, will have a real molecular weight of about $(36,00-84,000)_2X$ (depending on the vinyl content of the butadiene block).

The asphalt component may be naturally occurring bitumen or derived from a mineral oil. Also petroleum derivatives obtained by a cracking process, pitch and coal tar can be used as the asphalt components, as well as the blends of various asphalt materials. Examples of suitable components include distillation or "straight-run" bitumens, precipitation bitumens, e.g., propane bitumens, blown bitumens and mixtures thereof. Other suitable bitumens include mixtures of one or more of these bitumens with extenders such as petroleum extracts, e.g. aromatic extracts, distillates or residues, or with oils. Some representative examples of bitumens that may be used in the present invention have a PEN value of below about 300 as measured by ASTM Method D5 (at 25°C), and more in particular a PEN value in the range of from 25 to 300. More preferred bitumens to be used have a PEN value in the range of from 50 to 250, most preferably in the range of from 75 to 200. In roofing applications softer bitumen may be used, e.g., when filler is part of the composition. (Filler improves the stiffness of the composition and reduces the tack especially at lower temperatures.)

The amount of block copolymer component used in the compositions for asphalt binders may range from 1.5 to 15 percent by weight, preferably from 2 to 8, more preferably from 2 to 6 percent by weight, based on block copolymer and bitumen.

For Hot Mix Asphalt compositions the preferred ranges are 3 to 8 parts on 97 to 92 parts of aggregate, more preferably from 4 to 8 parts on 96 to 92 parts of aggregate (parts by weight).

The aggregate materials basically comprise inert granular materials such as rocks, stones, crushed stones, gravel, sand and filler. Aggregate material is used in different sizes from rather small to relatively course, e.g., less than 0.075 mm 0, and up to 40 mm 0, and is available in all sizes between the given boundaries. The aggregate composition is then chosen so that it fulfils mechanical/structural requirements, which can either be a continuous grading or gap-grading.

Aggregates can either be natural or manufactured. Natural gravel and sand are usually dug or dredged from a pit, river, lake, or seabed. Crushed aggregate is produced by crushing quarry rock, boulders, cobbles, or large-size gravel. Recycled concrete is a viable source of aggregate, as is the use of industrial by-products such as slag (by-product of metallurgical processing). Aggregate processing consists of crushing, screening, and washing the aggregate to obtain proper cleanliness and gradation. If necessary, a benefaction process such as jigging or heavy media separation can be used to upgrade the quality. Once processed, the aggregates are handled and stored in a way that minimizes segregation and degradation and prevents contamination. Aggregates strongly influence the properties of a HMA composition, mixture proportions, and economy. Consequently, selection of aggregates is an important process. Although some variation in aggregate properties is expected, characteristics that are considered when selecting aggregate include:

grading; durability; particle shape and surface texture; abrasion and skid resistance; unit weights and voids; and absorption and surface moisture.

Grading refers to the determination of the particle-size distribution for aggregate. Grading limits and maximum aggregate size are specified because grading and size affect the amount of aggregate used as well as workability and durability of hot mix asphalt.

The selection of aggregate size can be such that the voids left by the coarsest particles are filled by smaller particles. The voids between the smaller particles are yet again filled by even smaller particles and so on. In this case the grading is called continuous. The selection can also be such that a certain particle size is left out. In this case the aggregate material is referred to as a gap-graded mix.

In the table 1 hereinafter, examples are given of some standard aggregate materials. In the left hand column the diameter of the sieve size is given. Thus, using a sieve having 11.2 mm size holes only some 0-6 parts by weight of aggregate material is retained. In case of a sieve having 63 mu size holes, nearly all aggregate material is retained. What is obvious from these examples is that the distribution in continuous graded aggregate is roughly equal, whereas such is not the case in open gap-graded and dense gap-graded aggregates.

**Table 1**

| sieve size Ø | continuous graded | Open gap-graded | Dense gap-graded |
| --- | --- | --- | --- |
| C11,2 mm | 0-6 | 0-5 | 0-8 |
| C8 mm | 5-25 | 60-85 | 40-55 |
| C5,6 mm | 25-50 | 80-85 | 60-75 |
| 2 mm | 52-58 | 85 | 72.2-82.5 |
| 63 mu | 92.5-94 | 95.5 | 90-94 |

Other components that may be used include fillers and reinforcing agents such as ground tires, silica, talc, calcium carbonate, mineral matter powder, and fibres (glass, cellulose, acryl, and rock); curing agents such as sulphur and sulphur compounds; pigments; softening agents such as paraffinic, naphthenic or aromatic oils; tackiness imparting resins; foaming agents; and stiffeners such as waxes and low molecular weight polyolefins.

In addition to the binder composition and the new polymer composition, the present invention also concerns pavements and overlays based on the asphalt binder described above.

It has been surprisingly found that the polymer modified bitumen compositions according to the present invention also can be advantageously used in crack filler applications where the polymer offers the elasticity and softness desired for crack filler; in self adhered membranes, and in high efficiency crosslinked product for paving. They may also be used in shingles and roofing felts, carpet backing and sound deadening, as well as in coatings based on polymer modified bitumen. The use in roofing applications is described in more detail hereinafter.

The basic part or framework of a roll roofing membrane is the reinforcing mat. The reinforcing mat is made of a material which is capable of being saturated and/or coated with bituminous compositions which can be polymer modified asphalt or some other material such as unmodified asphalt. Such materials include fibrous materials including glass and polyester fibres. The roll roofing membrane may or may not be topped with granules. In order to make the roll roofing membrane of the present invention, a reinforcing mat is saturated with said compound or a layer of the bituminous composition is coated onto at least one surface of the membrane to form a protective layer. It may or may not saturate the membrane. This is generally the surface which will be exposed to the heat when the roll roofing membrane is welded (e.g., torched) as it is applied on the surface of a roof. A plastic cover sheet may be placed over the top of the layer to prevent the membrane from adhering to itself. The plastic sheet generally bums off during torching or hot air welding. This sheet may be perforated in order to allow bitumen on the roof to bond with bitumen on or in the membrane if the roll roofing membrane is attached to the roof by means other than torching, e.g., by mopping asphalt or solvent-based asphalt cut back adhesive.

The bituminous roofing composition of the present invention, while it is described herein in terms of its use with a roll roofing membrane, may also be used to advantage as a mopping bitumen composition. A mopping bitumen composition is one which is applied to the surface of a roof by mopping or other similar means. The composition of the present invention may also be used as a cold applied adhesive. Cold applied adhesives are used in repair work and in cases in which it is dangerous or not allowed to use an open flame.

The bituminous component in the bituminous block copolymer compositions for roofing applications is the same as the asphalt component described hereinbefore.

The amount of block copolymer component used in the compositions for saturating and/or coating the reinforcing mat may range from 2 to 20 percent by weight, preferably from 5 to 15, more preferably from 8 to 14 percent, based on block copolymer and bitumen. Note that the amount that is used may be less than what is generally recommended for commercial block copolymer components used in the art, which is a further advantage.

In general block copolymer components of compositions used to saturate and/or coat the reinforcing mat are block copolymers of a vinyl aromatic hydrocarbon such as styrene and a conjugated diene such as butadiene or isoprene. Such elastomeric block copolymers can have general formulas A-B-A or (AB) X wherein each A block is a vinyl aromatic hydrocarbon polymer block, each B block is a conjugated diene polymer block, X is a coupling agent, and n is an integer from 2 to 30. Such block copolymers can be linear or may have a radial or star configuration as well as being tapered. Block copolymers such as these are well known and are described together with their use in bituminous compositions in many patents including

US 3265765 --.

;

US 4405680 --.

;

US 4405680 --.

;

US 4405680 --.

;

US 4405680 --.

;

US 5719216 --.

;

US 5854335 --.

;

US 6133350 --.

;

US 6120913 --.

; and

US 2004048979 --.

These patents are herein incorporated by reference.

In the bituminous roofing compositions of the present invention, styrenic block copolymer and elastomer may be used in the relative amounts described hereinbefore.

The bituminous roofing compositions of the present invention may contain other materials such as fillers including calcium carbonate, limestone, chalk, ground rubber tires, etc. If other materials are added, the relative amounts of the bitumen and polymer specified above remain the same. The filler is generally used in an amount from 0 to 65 percent by weight based on the total composition. The filler is used to harden or stiffen the composition and to decrease its cost. Preferably, the amount of filler to be used in the composition of the present invention is from 1 to 50 percent by weight because it is easier to process and the membrane rolls are not too heavy.

It is also known in the art to use cross-linking agents or "compatibilizers" such as sulphur and the like. Cross-linking agents for asphalt applications (i.e., both in asphalt binders and in roofing compositions) are also well known in the art. As examples,

US 5017230 --.

,

US 5756565 --.

,

US 5795929 --.

and

US 5605946 --.

disclose various cross-linking compositions and refer to other patents that disclose cross-linking compositions. For various reasons including costs, environmental impact, and ease of use, elemental sulphur with inorganic zinc compounds are preferred. Most cross-linking formulations use elemental sulphur due to cost. In special situations, the sulphur can be added with a sulphur donor such as dithiodimorpholine, zinc thiuram disulfide, or any compound with two or more sulphur atoms bonded together. The zinc is added as zinc 2-mercaptobenzothiazole, zinc tetra alkylthiuram disulfide, zinc oxide, zinc dialkyl-2-benzosulfenamide, or other suitable zinc compound or mixtures thereof.

The compositions of the present invention, the bituminous roofing composition in particular, may include the addition of normally solid or non-liquid cross-linking agents. These cross-linking agents are normally sold in powder or flake form. The quantity of elemental sulphur which may be employed in the invention may vary from 0.05 to 0.2 wt %, preferably from 0.1 to 0.15 wt %, based on the total amount of bituminous composition. In case of a roofing application, this is calculated prior to filing with (mineral) filler. A corresponding quantity of an alternative cross-linking agent may be used.

The bituminous roofing composition of the invention may also contain one or more tackifying resins in an amount of from 0 to 25 weight percent of the total bituminous composition (again, prior to filling with filler). Higher quantities can be used but to the detriment of some properties. The role of tackifying resins is well known in the sector of adhesives. The tackifying resins are well known conventionally and are more particularly described in

US 4738884 --.

, which is incorporated herein by reference in its entirety. The use of a tackifying resin

in an asphalt binder is not common, but not excluded either

The polymer modified bituminous block copolymer compositions of the present invention may be prepared by various methods. A convenient method comprises blending of the two components at an elevated temperature, preferably not more than about 200 degrees Centigrade to keep the asphalt heating costs down and to prevent adverse temperature effects.

The present invention will hereinafter be illustrated more specifically by the following examples, however without restricting the scope to these specific embodiments.

<u>Test methods</u>

Standard tests were carried out for softening point Ring & Ball (according to ASTM D36), Penetration at 25°C (ASTM D5), elastic recovery (DIN 52013), and fracture toughness (analogous to ASTM E399).

In addition the dynamic viscosity at 150°C was determined, which is the temperature at which HMA is typically hauled. At blending conditions (which are at temperatures even above 150°C, involving high shear) the dynamic viscosity should be low, whereas during transport it should be high.

The dynamic viscosity was also determined at 120°C as a function of shear rate. This test models the temperature and shear conditions during compacting. An ideal HMA should have a low dynamic viscosity at high temperatures and high shear conditions, a high dynamic viscosity at 150°C at low shear conditions, coupled with a drop in dynamic viscosity at high shear conditions at 120°C.

Shear-rate dependency has been measured using a Haake Rotoviscometer with beaker and coaxial cylinder and shear rates from 20 to 500 $s^{-1}$.

<u>Synthesis of the block copolymer compositions SBS-1, SBS-2, SBS-3 and SBS-4</u>

Cyclohexane, styrene, and butadiene were purified by activated aluminumoxide and stored at 4 °C under a nitrogen atmosphere. EPON™ 826 (a diglycidyl ether) was used as coupling agent. An autoclave, equipped with a helical stirrer was charged with cyclohexane and the content was heated to 50 to 60 °C. As initiator sec-BuLi was dosed immediately followed by styrene monomer, which was allowed to polymerize to completion. The reaction temperature was increased to 70 °C, at which temperature butadiene was dosed and reacted. The resulting diblock was coupled with EPON™ 826 using a molar equivalent ratio relative to Li from 0.10 to 0.20. Ethanol was added to the reaction mixture as terminator. The reaction mixture was cooled to 40 °C, transported to a blending vessel and a stabilization package was added (comprising IRGANOX™ 565 and tris(nonylphenol)phosphite 0.08/0.35 phr as a cyclohexane solution) and stirred at RT. Dry rubber was obtained by steam coagulation finishing, followed by drying in an oven.

The polymers were analyzed by Liquid High Performance Size Exclusion Chromatography (LHPSEC), using several substantially pure poly(styrene) calibration standards as described in ASTM D-52969). The results of the LHPSEC analysis are in Table 2.

The polymer modified binders were based on a PX-100 bitumen (a PEN 100 bitumen consisting of 75% propane bitumen and 25% Brightstock Furfural Extract) by blending the polymer composition or components at a modification level of 5% by weight polymer composition or total weight of the components with the bitumen at 160 - 180°C

<u>Example 1</u>

Polymer modified binders were made with 100% triblock or diblock styrenic block copolymer (Comparatives A and B), with a combination of a triblock and diblock styrenic block copolymer at weight ratios 85/15, 70/30 and 50/50 (Experiments 1-3), as well as with the hereinbefore synthesised block copolymers SBS-1, SBS-2 and SBS-3 (Experiments 4-6). Results from Table 3 show that Comparative A does not exhibit the desired drop in viscosity as a result of shear (shear thinning). Comparative B does exhibit a drop in viscosity, but at a dynamic viscosity level at 150°C that prohibits successful mixing. Table 4 lists the results of Experiments 1-3, Table 5 lists the results of Experiments 4-6. These experiments reveal the desired viscosity behaviour.

**Table 2**

| Polymer | SB diblock | SBS triblock | SBS-1 | SBS-2 | SBS-3 | SBS-4 |
|---|---|---|---|---|---|---|
| Total Mw (di) | 139,700 | - | 189,500 | 177,800 | 169,400 | ~200,000 |
| Total Mw (tri) | - | 294,100 | 379,000 | 355,600 | 338,800 | -400,000 |
| CE (%) | 0 | 0 | 23.3 | 27.8 | 37 | -20 |
| PSC (%) | 30 | 30 | 30 | 30 | 30 | -30 |

CE = coupling efficiency; PSC = Polystyrene content.

**Table 3**

| Properties | Comp A (SB) | Comp B (SBS) |
|---|---|---|
| Softening point R&B (°C) | 53.5 | 105.5 |
| Penetration at 25°C (dmm) | 66 | 59 |
| Elastic recovery 20 cm, 13°C (%) | 45.7 | 93.3 |
| Ductility 13°C, cm | 43.9 | >100 |
| Dynamic visc. 150°C, 26s$^{-1}$ (mPas) | 439 | 1282 |
| Dynamic visc. 150°C, 395s$^{-1}$ (mPas) | 460 | 1040 |
| Dynamic visc. 120°C, | 2540 | 4415 |
| 26s$^{-1}$ (mPas) | 2454 | 3306 |
| 52 | 2429 | 2960 |
| 79 | 2418 | 2757 |
| 105 | 2368 | |
| 132 | | |

**Table 4**

| Properties | Exp 1 (85/15) | Exp 2 (70/30) | Exp 3 (50/50) |
|---|---|---|---|
| Softening point R&B (°C) | 58.5 | 67.5 | 92 |
| Penetration at 25°C (dmm) | 64 | 62 | 61 |
| Elastic recovery 20 cm, 13°C (%) | 70.3 | 76.8 | 83.8 |
| Ductility 13°C, cm | >100 | >100 | >100 |
| Dynamic visc. 150°C, 26s$^{-1}$ (mPas) | 510 | 586 | 763 |
| Dynamic visc. 150°C, 395s$^{-1}$ (mPas) | 537 | 613 | 765 |
| Dynamic visc. 120°C, | 2804 | 3168 | 3550 |
| 26s$^{-1}$ (mPas) | 2450 | 2639 | 2875 |
| 52 | 2368 | 2461 | 2615 |
| 79 | 2283 | 2314 | 2467 |
| 105 | 2291 | 2237 | 2381 |
| 132 | | | |

All polymer modified bitumen exhibit attractive properties for road (and other) applications. Moreover, a quite noticeable drop in dynamic viscosity is observed, in particular for Experiments 2 and 3. The dynamic viscosity at 150°C for the binder of Experiment 3 is relatively high. Experiment 2 is clearly the best performer.

**Table 5**

| Properties | Exp 4 SBS-1 | Exp 5 SBS-2 | Exp 6 SBS-3 |
|---|---|---|---|
| Softening point R&B (°C) | 94.5 | 91.5 | 88.5 |
| Penetration at 25°C (dmm) | 71 | 67 | 67 |
| Elastic recovery 20 cm, 13°C (%) | 76.2 | 73.2 | 79.2 |
| Ductility 13°C, cm | >100 | >100 | >100 |
| Dynamic visc. 150°C, 26s$^{-1}$ (mPas) | 1083 | 854 | 790 |
| Dynamic visc. 150°C, 395s$^{-1}$ (mPas) | 719 | 771 | 848 |
| Dynamic visc. 120°C, | 3858 | 3640 | 3757 |
| 26s$^{-1}$ (mPas) | 2990 | 3001 | 3008 |
| 52 | 2708 | 2778 | 2773 |
| 79 | 2563 | 2673 | 2654 |
| 105 | | | |
| 132 | | | |

Exp 4 exhibits the greatest drop in viscosity, whilst having the largest viscosity at 150°C, 26s$^{-1}$.

**Example 2 (drainage test)**

Six polymer modified bitumen were prepared by blending comparative or inventive polymers at 4, 6 or 6.5% with the PX-100 bitumen. Polymers used were KRATON® D1116 (a radial SBC polymer having about 4 arms attached to the residue of the coupling agent.), KRATON® D1118 (a linear SBC polymer having a coupling efficiency of 20%, a PSC of 31% and a molecular weight of less than 200,000), and the aforementioned SBS-1 and SBS-4.

Blending was carried out under standard conditions with a high shear mixer. PMB 1 and PMB2 are comparative binders (PMB1 = 4.5% D1116; PMB2 = 6% D1116), PMB3 and PMB4 are binders in accordance with the present invention (PMB3 = 4.5% SBS-1 and PMB4 = 6% SBS-1). Finally PMB5 and PMB6 are binders comprising 6% SBS-4, respectively 6% D1118 (showing the effect of the molecular weight on the drainage properties).

Stone Mastic Asphalt mixes were by mixing at 165°C 6.8% by weight one of the above four polymer modified bitumen (at a pre-mixing temperature of 175°C) with a pre-heated gap graded aggregate (175°C) comprising 10.3% by weight filler; 12.8% by weight crushed sand; 13.0% aggregate 4-8 mm 0; 13.1% by weight aggregate 8-11mm 0, and 50.8% by weight aggregate 11-16 mm 0.

The SMA mixes were subjected to the Schellenberg binder drainage test (according to the draft Comité Européen de Normalisation standard no. 12697-18), which measures the drainage during 1 hour at mixing temperature plus 25°C. The results are set out in Table 6.

**Table 6**

| Binder composition | PMB1* | PMB2* | PMB3 | PMB4 | PMB5 | PMB6* |
|---|---|---|---|---|---|---|
| Softening point Ring &Ball (°C) | 74 | 82.5 | 64 | 97 | 93 | -53 |
| Viscosity (mPas) | 2327 | - | 1944 | 2419 | - | 1635 |
| @ 120°C | 637 | 986 | 623 | 915 | 989 | 413 |
| @ 150°C | 233 | 391 | 231 | 405 | 473 | - |
| @ 180°C | | | | | | |
| Av. Drainage (%) | 2.0 | 1.5 | 0.6 | 0.7 | 0.04 | 2.4 |

The binders PMB 1 *, PMB2* and PMB6* are comparative. The binders with both 4.5 and 6% of SBS-1 or SBS-4 had substantially reduced drainage.

<u>Example 3</u>

A comparison of the viscosity-shear rate relation of block copolymer modified bitumen composition according to the present invention comprising SBS-4, and a corresponding composition, comprising a block copolymer KRATON D-1118, was made and the test data have been listed in Table 7. The block copolymer proportion in the tested compositions was 6 % by weight and the applied bitumen was a PX-100 grade. Said KRATON D-1118 block copolymer can be regarded as a relevant representative of the block copolymers used in the bitumen compositions according to the hereinbefore discussed DE-20310484 U (PSC 31 %, CE 20 % and a MW of triblock lower than 200,000). It will be appreciated that comparable bitumen compositions comprising the block copolymer KRATON D-1118 did not show the advantageous pseudo-plastic or shear thinning properties, which are provided by compositions of the present invention, as can be derived from Table 7.

**Table 7**

| Shear rate (sec⁻¹) | PMB5 (with 6 %w SBS-4) | | | | PMB6 (with 6 %w D-1118) | | | |
|---|---|---|---|---|---|---|---|---|
| 0 | 120°C | 130°C | 140°C | 150°C | 120°C | 130°C | 140°C | 150°C |
| 26 | 5007 | 3265 | 2485 | 1761 | 1749 | 977 | 608 | 423 |
| 52 | 3900 | 2438 | 1769 | 1342 | 1733 | 993 | 619 | 404 |
| 79 | 3574 | 2192 | 1561 | 1156 | 1725 | 987 | 625 | 412 |
| 105 | | 2085 | 1461 | 1083 | 1682 | 984 | 620 | 414 |
| 132 | | 1988 | 1395 | 1037 | 1661 | 980 | 617 | 412 |
| 159 | | 1957 | 1366 | 1007 | 1658 | 979 | 619 | 413 |
| 185 | | | 1336 | 994 | 1665 | 982 | 615 | 413 |
| 211 | | | 1306 | 979 | | 983 | 614 | 412 |
| 237 | | | 1280 | 966 | | 982 | 614 | 413 |
| 264 | | | | 956 | | 980 | 614 | 411 |
| 290 | | | | 950 | | 978 | 613 | 407 |
| 316 | | | | 944 | | 975 | 612 | 406 |
| 343 | | | | | | | 611 | 404 |
| 369 | | | | | | | 610 | 403 |
| 395 | | | | | | | 609 | 403 |
| 421 | | | | | | | 608 | 402 |
| 447 | | | | | | | 607 | 402 |
| 474 | | | | | | | 605 | 401 |
| 500 | | | | | | | 603 | 400 |

<u>Examples 4-8. Comparative Example D (Preparation of PMB blends) relating to roofing</u>

Polymer Modified Bitumen blends were prepared with a Silverson L4R high shear mixer. The bitumen was heated to 160°C and subsequently the polymer(s) added. During polymer addition and disintegration the temperature increased to 180°C, which is caused by the energy input of the mixer. At 180°C the temperature was kept constant by on/off switching of the high shear mixer. Blending was continued until a homogeneous blend was obtained which was monitored by fluorescence microscopy.

The polymer composition that has been used in the Examples 4 to 8 is SBS-4.

In Examples 4 to 6, a modification level of 12% polymer on bitumen was evaluated in various types of bitumen. In Comparative Example D KRATON® D1186 has been used, a commercial clear branched styrenic block copolymer, based on styrene and butadiene and having a styrene content of about 30%. The bitumen used in the Examples are the following:

### Table 8

| | |
|---|---|
| B-85 bitumen | a PEN 85 bitumen with an asphaltenes/saturates/aromatics/resins content of about 12/11.5/55/21.5 %wt |
| B-180 bitumen | a PEN 180 bitumen with an asphaltenes/saturates/aromatics/resins content of about 12/14/52/22 %wt |
| PX200 bitumen | a propane bitumen containing bright furfural extract with a PEN of about 200 and an asphaltenes/saturates/aromatics/resins content of about 6/5.5/66.5/22 %wt |

**Preparation of samples for flow an d cold-bending analyses**

A certain quantity of PMB is poured into a spacer with defined dimensions (15 cm x 23 cm x 0.15 cm) including glass-fibre as a carrier. Covered with silicon paper the sample is placed in a Pasadena hydraulic press and pressed for 5 minutes with a load of 15000 Pounds at 150°C. After a cooling period of 10 minutes a 2nd spacer is placed on the other side of the carrier and the procedure as described above is repeated. The roofing sheet thus created is cut from its spacers and test specimen can be cut for flow and cold-bending analyses.

**Rheological properties tested**

The bituminous blends were tested according to the following methods:

### Table 9

| | |
|---|---|
| Softening point R&B | ASTM D36, corrected for stirring with +1.5°C |
| Cold bend | UEAtc M.O.A.T. no.31:1984 |
| Flow resistance | DIN 52123 Aug.1985 |
| Blend viscosity at 180°C | British Standard EN 13702-2 |
| Gelation Tendency | Described below |
| Artificial ageing | 3 months at 70°C in an air ventilated oven |

**Gelation tendency**

In a modified Haake Rotoviscometer 50 grams of the ready-made blend is stirred with an anchor shaped stirrer at a rotation speed of 300 rpm at 200°C while a constant flow of air of 20 Nl/hr is blown on the surface of the sample. The stirrer is directly attached to the measuring device of the Haake viscometer, such that an increase in the sample's viscosity, indicative of the onset of gelation, is recorded as an increase in the Haake's torque signal. This torque signal is a measure for the sample's viscosity and is monitored until a sudden steep torque increase indicates that the relative viscosity increases sharply. The number of hours after which this steep viscosity increase occurs is a measure for the blend's gelation tendency.

### Table 10, Rheological properties of 12 % PMB

| Example | Ex.4 | Ex.5 | Ex.6 | CEx.D |
|---|---|---|---|---|
| Bitumen | B85 | PX200 | B 180 | B 180 |
| Polymer | SBS-4 | SBS-4 | SBS-4 | D1186 |
| Softening point R&B, °C | 127 | 125 | 126 | 125 |
| Penetration at 25°C, dmm | 56 | 86 | 90 | 44 |
| Viscosity at 180°C, mPa.s | | | | |
| Shear rate @ 20 $s^{-1}$ | 3600 | 4860 | 2340 | 1860 |
| Shear rate @ 100 $s^{-1}$ | 2600 | 3120 | 1840 | 1380 |
| Cold bend, pass °C | -25 | -35 | -40 | -30 |
| DIN flow, pass °C | 110 | 110 | 110 | 100 |

(continued)

| Example | Ex.4 | Ex.5 | Ex.6 | CEx.D |
|---|---|---|---|---|
| Service T-range, °C | 135 | 145 | 150 | 130 |
| Time to Gelation at 200°C, hr | n.d. | n.d. | 77 | 48 |

With the blend of SBS-4 in the hard B85 bitumen, the performance is especially suited for hot climate conditions.

**Table 11, Evaluations varying composition in B180 bitumen**

| Example | Ex.6 | Ex.7 | Ex.8 |
|---|---|---|---|
| Bitumen | B 180 | B 180 | B 180 |
| Polymer | SBS-4 | SBS-4 | SBS-4 |
| Polymer content, %wt | 12 | 10 | 10 |
| Sulphur, %wt | - | - | 0.1 |
| Softening point R&B, °C | 126 | 113 | 125 |
| Penetration at 25°C, dmm | 90 | 89 | 77 |
| Viscosity at 180°C, mPa.s | | | |
| Shear rate @ 20 $s^{-1}$ | 2340 | 1630 | 1820 |
| Shear rate @ 100 $s^{-1}$ | 1840 | 1120 | 1240 |
| Cold bend, pass °C | -40 | -25 | -20 |
| DIN flow, pass °C | 110 | 105 | 110 |
| Service T-range, °C | 150 | 130 | 130 |

The results with the blend with 10% SBS-4 in B 180 bitumen show the advantage and strength of the new polymer composition. Even with a lower modification level, the high temperature resistance is maintained while with the combination of results obtained, I.e., soft compound, low viscosity and high flow resistance, the claimed polymer is especially suited in bitumen as easy welding compound. The presence of sulphur as cross-linking agent increases the softening point and results in a harder bitumen, as expected.

The blending stability of SBS-4 in PX200 and B180 bitumen are presented in Table 10, while the results with D1186 in both types of bitumen are also given for comparison reasons.

The profiles confirm the observations that improved blending (hot storage) stability is obtained with SBS-4 in bitumen in comparison with that found for the standard D1186.

**Table 12, Blending stability (R&B vs. time) of SBS-4 in PX200 and B180 bitumen**

| Polymer: | SBS-4 | D1186 | SBS-4 | D1186 |
|---|---|---|---|---|
| Bitumen: | B180 | B 180 | PX200 | PX200 |
| R&B (°C) after blending t= 0 hr | 125 | 124 | 125 | 122 |
| R&B (°C) after blending t= 24 hr | 127 | 121 | 124 | 118 |
| R&B (°C) after blending t= 24 hr | 126 | 120 | 124 | 116 |
| R&B (°C) after blending t= 72 hr | 128 | 120 | 120 | 116 |

<u>CONCLUSIONS</u>

From the initial screening and contour study it can be concluded that with polymer compositions as claimed, the visco-elastic properties are maintained even at high Elastomer (e.g., diblock) levels, resulting in surprisingly good service temperature range performances, while one benefits low blend viscosities and improved blending (hot storage) stability.

SBS-4 in B 180 bitumen shows an improved service temperature range and resistance to gelation in comparison with that of the blend with a standard radial SBS, high coupled KRATON® D1186. With SBS-4 incorporated a softer compound is obtained, however, combined with a good high temperature flow resistance. The latter phenomenon can be attributed to the pseudo-plastic behaviour of the polymer.

SBS-4, in comparison with standard SBS, excels in the following properties, justifying the use of SBS-4 in specific roofing application:
Wide service temperature range (Δ cold bend and flow resistance).
Soft compound (high penetration value) in combination with good high temperature flow resistance (pseudo-plastic behaviour).
Improved hot storage and resistance to gelation.

**Claims**

1.  A polymer modified bitumen composition, comprising 80 to 98.5 parts by weight of a bitumen and 20 to 1.5 parts by weight of a polymer composition, wherein the polymer composition comprises:

    (i) from 5 to 70% by weight of a linear styrenic block copolymer (SBC1) comprising at least two polymer blocks each substantially made of an aromatic vinyl compound and at least one polymer block substantially made of a conjugated diene compound and having an apparent molecular weight greater than 250,000 and/or a radial styrenic block copolymer (SBC2) having three or more polymer arms attached to the residue of a cross-linking agent or multifunctional compound, comprising at least two polymer blocks each substantially made of an aromatic vinyl compound and at least one polymer block substantially made of a conjugated diene compound and wherein the polymer arms have an average apparent molecular weight greater than 125,000 and
    (ii) from 95 to 30% by weight of an elastomer (E1) having an apparent molecular weight in the range of 120,000 to 250,000.

2.  A composition according to claim 1, comprising from 2 to 15 and more preferably from 8 to 14 percent of the polymer composition.

3.  A composition according to claim 1, wherein the elastomer (E1) is a styrenic diblock copolymer having one polymer block substantially made of an aromatic vinyl compound and at least one polymer block substantially made of a conjugated diene compound.

4.  A composition according to claim 1, wherein the styrenic block copolymer has a molecular weight in the range of 250,000 to 800,000, if said copolymer is a linear polymer, or in the range of 500,000 to 1,500,000, if said copolymer is a branched or star-shaped polymer.

5.  A composition according to claim 4, wherein the styrenic block copolymer is selected from the group consisting of those of the formulae

$$(B)_p\text{-}(A\text{-}B)_2 X; \text{ or } (B)_p\text{-}A(B\text{-}A)_n\text{-}(B)_p, \text{ (linear SBC1)}$$

$$((B)_p(A\text{-}B)_n)_m X \text{ (radial SBC2)}$$

    wherein A represents the polymer block substantially made of an aromatic vinyl compound, typically a polystyrene block; B a polymer block substantially made of a conjugated diene, typically a polybutadiene block, n is an integer greater than or equal to 1, m is an integer greater than 2, each p is independently 0 or 1, and X is the residue of a coupling agent or multifunctional monomer.

6.  A composition according to claim 5, wherein the styrenic block copolymer constituents are selected from the group consisting of A-B-A-(B)$_p$ or (A-B)$_2$ X,
    wherein A represents a polymer block substantially made of an aromatic vinyl compound and preferably a poly (styrene)block; B represents a polymer block substantially made of a conjugated diene, preferably a poly(butadiene) block; p is 0 or 1 and X is the residue of a coupling agent.

7.  A composition according to any one of the claims 1 to 6, wherein component (i) and (ii) are components of a polymer composition wherein the elastomer (E1) is a diblock copolymer of formula A-B that is co-produced in the synthesis of the styrenic block copolymer.

8. A composition according to any one of the claims 1 to 7, wherein the styrenic block copolymer polymer composition comprises a linear styrene-butadiene-styrene coupled block copolymer with a large amount of diblock copolymer, with the following characteristics:

styrene content in the range of 25-40%, preferably about 30% by weight:
diblock molecular weight 180,000-215,000, preferably about 200,000:
diblock content 75-85%, preferably 80% by weight (which corresponds with a coupling efficiency of 15-25, preferably 20%); and comprising polystyrene blocks having an apparent MW of from 30,000 to 40,000 and having poly(butadiene) blocks having an apparent MW of from 300,000 to 350,000.

9. A composition according to any one of claims 1 to 8, wherein the styrenic block copolymer (SBC1 and/or SBC2) and elastomer (E1) are used in the following relative amounts: (SBC1 and/or SBC2) in an amount of at least 5%, preferably at least 10%, more preferably at least 15% and most preferably at least 20%, and up to at most 70%, preferably at most 50% by weight, and (E1) in an amount of at most 95%, preferably at most 90%, more preferably at most 85% and most preferably at most 80%, and at least 30%, preferably at least 50%, all percentages by weight.

10. An asphalt binder, comprising a composition according to any one of the claims 1-8.

11. A hot mix asphalt comprising 2 to 8 parts by weight of the asphalt binder of claim 10, and 98 to 92 parts by weight aggregate material.

12. The hot mix asphalt of claim 11, wherein the aggregate material is gap-graded aggregate material, such as open gap-graded or dense gap-aggregate material.

13. Pavement comprising the compacted hot mix asphalt of claim 11 or 12.

14. A bituminous roofing composition comprising a composition according to any one of the claims 1 to 9.

15. A bituminous roofing composition according to claim 14, containing from 0 to 65 percent by weight of a filler, based on the total composition.

16. The composition of claim 14, containing from 0.05 to 0.2 wt% of a cross-linking agent, based on the total bituminous composition (prior to filing with a filler).

17. The composition of claim 14, containing one or more tackifying resins in an amount of from 0 to 25 weight percent of the total bituminous composition (prior to filing with a filler).

18. An easy welding roll roofing membrane which comprises a reinforcing mat and the bituminous composition of claim 14 which saturates and/or coats the reinforcing mat.

19. Polymer composition comprising a linear styrene-butadiene-styrene coupled block copolymer with a large amount of diblock copolymer, with the following characteristics:

styrene content in the range of 25-40%, preferably about 30% by weight:
diblock molecular weight 180,000-215,000, preferably about 200,000:
diblock content 75-85%, preferably about 80% by weight (which corresponds with a coupling efficiency of 15-25, preferably about 20%);
and comprising poly(styrene) blocks having an apparent MW of from 30,000 to 40,000 and poly(butadiene) blocks having an apparent MW of from 300,000 to 350,000.

**Patentansprüche**

1. Polymermodifizierte Bitumenzusammensetzung, umfassend 80 bis 98.5 Gewichtsteile Bitumen und 20 bis 1.5 Gewichtsteile einer Polymerzusammensetzung, worin die Polymerzusammensetzung umfasst:

(i) 5 bis 70 Gew.-% eines linearen Styrolblockcopolymers (SBC1) umfassend wenigstens zwei Polymerblocke, wobei jeder davon im Wesentlichen aus einer aromatischen Vinylverbindung hergestellt ist und wenigstens einen Polymerblock, der im Wesentlichen aus einer konjugierten Dienverbindung hergestellt ist und ein scheinbares Molekulargewicht aufweist, das größer als 250.000 ist und/oder ein radiales Styrolblockcopolymer (SBC2), das drei oder mehr Polymerarme aufweist, die am Rest eines Quervernetzungsmittels oder einer multifunktionalen Verbindung gebunden sind, umfassend wenigstens zwei Polymerblöcke, von denen jeder im Wesentlichen aus einer aromatischen Vinylverbindung hergestellt ist und wenigstens einem Polymerblock, der im Wesentlichen aus einer konjugierten Dienverbindung hergestellt ist und worin die Polymerarme ein scheinbares mittleres Molekulargewicht von mehr als 125.000 aufweisen und

(ii) 95 bis 30 Gew.-% eines Elastomers (E1), das ein scheinbares Molekulargewicht im Bereich von 120.000 bis 250.000 aufweist.

2. Zusammensetzung nach Anspruch 1, umfassend 2 bis 15 und mehr bevorzugt 8 bis 14 Prozent der Polymerzusammensetzung.

3. Zusammensetzung nach Anspruch 1, worin das Elastomer (E1) ein Styroldiblockcopolymer ist, das einen Polymerblock aufweist, der im Wesentlichen aus einer aromatischen Vinylverbindung hergestellt ist und wenigstens einen Polymerblock, der im Wesentlichen aus einer konjugierten Dienverbindung hergestellt ist

4. Zusammensetzung nach Anspruch 1, worin das Styrolblockcopolymer ein Molekulargewicht im Bereich von 250.000 bis 800.000 aufweist, wenn das Copolymer ein lineares Copolymer ist, oder im Bereich von 500.000 bis 1.500.000. wenn das Copolymer ein verzweigtes oder ein sternförmiges Polymer ist.

5. Zusammensetzung nach Anspruch 4, worin das Styrolblockcopolymer ausgewählt ist aus der Gruppe bestehend aus den Styrolblockpolymeren mit den Formeln

$$(B)_p\text{-}(A\text{-}B)_2X; \text{ oder } (B)_p\text{-}A(B\text{-}A)_n\text{-}(B)_p, \text{ (lineares SBC1)}$$

$$((B)_p(A\text{-}B)_n)_mX \text{ (radiales SBC2)},$$

worin A den Polymerblock darstellt, der im Wesentlichen aus einer aromatischen Vinylverbindung hergestellt ist, typischerweise ein Polystyrolblock; B einen Polymerblock darstellt, der im Wesentlichen aus einem konjugierten Dien hergestellt ist, typischerweise ein Polybutadienblock, n ist eine ganze Zahl größer als oder gleich 1, m ist eine ganze Zahl größer als 2, jedes p ist unabhängig voneinander 0 oder 1, und X ist der Rest eines Kopplunhgsmittels oder eines multifunktionalen Monomers.

6. Zusammensetzung nach Anspruch 5, worin die Styrolblockcopolymerbestandteile ausgewählt sind aus der Gruppe bestehend aus A-B-A-(B), oder $(AB)_2X$, worin A einen Polymerblock darstellt, der im Wesentlichen aus einer aromatischen Vinylverbindung hergestellt ist und vorzugsweise ein Poly(styrol)block ist; 8 einen Polymerblock darstellt, der im Wesentlichen aus einem konjugierten Dien hergestellt ist, vorzugsweise ein Poly(butadien)block darstellt, p ist to oder 1 und X ist der Rest eines Kopplungsmittels.

7. Zusammensetzung nach einem der Ansprüche 1 bis 6, worin die Bestandteile (i) und (ii) Bestandteile einer Polymerzusammensetzung sind, worin das Elastomer (E1) ein Diblockcopolymer der Formel A-B ist, das während der Synthese des Styrolblockcopolymers mit hergestellt wird.

8. Zusammensetzung nach einem der Ansprüche 1 bis 7, worin die Styrolblockcopolymer Polymerzusammensetzung ein lineares gekoppeltes StyrolButadien-Styrolblockcopolymer umfasst mit einem großen Anteil an Diblockcopolymer mit den folgenden Merkmalen:

einem Styrolgehalt im Bereich von 25-40%, vorzugsweise ungefähr 30 Gew.-% ein Diblockmolekulargewicht von 180.000-215.000, vorzugsweise von ungefähr 200.000
einem Diblockgehalt von 75-85%, vorzugsweise 80 Gew.-% (was einer Kopplungsausbeute von 15-25, vorzugsweise 20% entspricht)
und umfassend Polystyrolblöcke, die ein scheinbares Molekulargewicht von 30.000 bis 40.000 aufweisen und weiter Poly(butadien)blöcke aufweist, die ein scheinbares Molekulargewicht von 300.000 bis 350.000 aufweisen.

**9.** Zusammensetzung nach einem der Ansprüche 1 bis 8, worin das Styrolblockcopolymer(SBC1 und/oder SBC2) und das Elastomer (E1) in den folgenden relativen Anteilen verwendet werden: (SBC1 und/oder SBC2) in einem Anteil von wenigstens 5%, vorzugsweise wenigstens 10%, mehr bevorzugt wenigstens 15% und am meisten bevorzugt wenigstens 20%, und bis zu höchstens 70%, vorzugsweise höchstens 50 Gew -% und (E1) In einem Anteil von höchstens 95%, vorzugsweise höchstens 90%, mehr bevorzugt höchstens 85% und am meisten bevorzugt höchstens 80% und wenigstens 30%, vorzugsweise wenigstens 50%, wobei alle Prozentangaben in Gewichtsprozent angegeben sind,

**10.** Asphaltbinder, umfassend eine Zusammensetzung nach einem der Ansprüche 1 bis 8

**11.** Ein Heißmischungsasphalt, umfassend 2 bis 8 Gewichtsteile des Asphaltbinders nach Anspruch 10 und 98 bis 92 Gewichtsteile an Aggragatmaterial,

**12.** Heißmischungsasphalt nach Anspruch 11, worin das Aggregatmaterial eine diskontinuierliche Größenverteilung aufweist, wie Aggregatmaterialien mit offener Größenverteilung oder dichter Größenverteilung.

**13.** Straßenbelag, umfassend den kompaktierten Heißmischungsasphalt nach Anspruch 11 oder 12.

**14.** Bituminöse Dachbetagszusammensetzung umfassend eine Zusammensetzung nach einem der Ansprüche 1 bis 9.

**15.** Bituminöse Dachbelagszusammertsetzung nach Anspruch 14, enthaltend 0 bis 65 Gew.-% eines Füllmaterials bezogen auf die gesamte Zusammensetzung.

**16.** Zusammensetzung nach Anspruch 14, enthaltend 0,05 bis 0,2 Gew.-% eines Quervernetzungsmittels bezogen auf die gesamte bituminöse Zusammensetzung (vor der Zugabe eines Füllmaterials),

**17.** Zusammensetzung nach Anspruch 14, enthaltend ein oder mehr Harze zur Erhöhung der Klebrigkeit in einer Menge von 0 bis 25 Gew.-% der gesamten bituminösen Zusammensetzung (vor der Zugabe eines Füllmaterials).

**18.** Leicht schweißbare Rolldachpappe, die eine Verstärkungsmatte umfasst und die bituminöse Zusammensetzung nach Anspruch 14, die die Verstärkungsmatte imprägniert und/oder beschichtet.

**19.** Polymerzusammensetzung, umfassend ein gekoppeltes lineares Styrol-Butadien-Styrol-Blockcopolymer mit einem großen Anteil eines Diblockcopolymers mit den folgenden Merkmalen:

einen Styrolgehalt im Bereich 25-40%, vorzugsweise ungefähr 30 Gew.-%: einem Diblockmolekulargewicht von 180.000-215.000 vorzugsweise ungefähr 200.000
einen Diblockgehalt von 75-85%, vorzugsweise ungefähr 80 Gew.-% (was einer Kopplungsausbeute von 15-25. vorzugsweise von ungefähr 20% entspricht);
und umfassend Polystyrolblöcke, die ein scheinbares Molekulargewicht von 30.000 bis 40.000 aufweisen und Poly(butadien)blöcke, die ein scheinbares Molekulargewicht von 300.000 bis 350.000 aufweisen.

## Revendications

**1.** Composition de bitume modifiée par polymère, comprenant 80 à 98,5 parties en poids d'un bitume et 20 à 1,5 partie en poids d'une composition de polymère, dans laquelle la composition de polymère comprend :

(i) de 5 à 70 % en poids d'un copolymère bloc styrénique linéaire (SBC1) comprenant au moins deux blocs de polymère constitués chacun sensiblement d'un composé vinylique aromatique et au moins un bloc de polymère constitué sensiblement d'un composé de diène conjugué et ayant un poids moléculaire apparent de plus de 250 000 et/ou d'un copolymère bloc styrénique radial (SBC2) comportant trois branches de polymère ou plus fixées au résidu d'un agent de réticulation ou d'un composé multifonctionnel, comprenant au moins deux blocs de polymère constitués chacun sensiblement d'un composé vinylique aromatique et au moins un bloc de polymère constitué sensiblement d'un composé de diène conjugué et dans lequel les branches de polymère ont un poids moléculaire apparent moyen de plus de 125 000, et
(ii) de 95 à 30 % en poids d'un élastomère (E1) ayant un poids moléculaire apparent allant de 120 000 à 250 000.

**2.** Composition suivant la revendication 1, comprenant de 2 à 15 et plus avantageusement de 8 à 14 % de la composition de polymère.

**3.** Composition suivant la revendication 1, dans laquelle l'élastomère (E1) est un copolymère dibloc styrénique comportant un bloc de polymère constitué sensiblement d'un composé vinylique aromatique et au moins un bloc de polymère constitué sensiblement d'un composé de diène conjugué.

**4.** Composition suivant la revendication 1, dans laquelle le copolymère bloc styrénique a un poids moléculaire allant de 250 000 à 800 000, si ledit copolymère est un copolymère linéaire, ou allant de 500 000 à 1 500 000, si ledit copolymère est un polymère ramifié ou en forme d'étoile.

**5.** Composition suivant la revendication 4, dans laquelle le copolymère bloc styrénique est choisi dans le groupe comprenant ceux des formules :

$$(B)_p\text{-}(A\text{-}B)_2X;\ ou\ (B)_p\text{-}A(B\text{-}A)_n\text{-}(B)_p,\ (SBC1\ linéaire)$$

$$((B)_p(A\text{-}B)_n)_mX\ (SBC2\ radial)$$

dans lesquelles A représente le bloc de polymère constitué sensiblement d'un composé vinylique aromatique, normalement un bloc de polystyrène, B est un bloc de polymère constitué sensiblement d'un diène conjugué, normalement un bloc de polybutadiène, n est un nombre entier supérieur ou égal à 1, m est un nombre entier supérieur à 2, chaque p vaut indépendamment 0 ou 1, et X est le résidu d'un agent de couplage ou d'un monomère multifonctionnel.

**6.** Composition suivant la revendication 5, dans laquelle les constituants du copolymère bloc styrénique sont choisis dans le groupe comprenant $A\text{-}B\text{-}A(B)_p$ et $(A\text{-}B)_2X$, dans lesquels A représente un bloc de polymère constitué sensiblement d'un composé vinylique aromatique et avantageusement un bloc de poly(styrène), B représente un bloc de polymère constitué sensiblement d'un diène conjugué, avantageusement un bloc de poly(butadiène), p est égal à 0 ou 1 et X est le résidu d'un agent de couplage.

**7.** Composition suivant l'une quelconque des revendications 1 à 6, dans laquelle les composants (i) et (ii) sont des composants d'une composition de polymère dans laquelle l'élastomère (E1) est un copolymère dibloc de formule A-B qui est produit conjointement dans la synthèse du copolymère bloc styrénique.

**8.** Composition suivant l'une quelconque des revendications 1 à 7, dans laquelle la composition de polymère de copolymère bloc styrénique comprend un copolymère bloc couplé de styrène-butadiène-styrène linéaire avec une grande quantité de copolymère dibloc, avec les caractéristiques suivantes :

une teneur en styrène allant de 25-40 %, avantageusement d'environ 30 % en poids;
un poids moléculaire de dibloc de 180000-215000, avantageusement d'environ 200 000;
une teneur en dibloc de 75-85 %, avantageusement de 80 % en poids (ce qui correspond à un rendement de couplage de 15-25, avantageusement de 20 %); et comprenant des blocs de polystyrène ayant un PM de 30 000 à 40 000 et ayant des blocs de poly(butadiène) ayant un PM de 300 000 à 350 000.

**9.** Composition suivant l'une quelconque des revendications 1 à 8, dans laquelle le copolymère bloc styrénique (SBC1 et/ou SBC2) et l'élastomère (E1) sont utilisés dans les quantités relatives suivantes : (SBC1 et/ou SBC2) en une quantité d'au moins 5 %, avantageusement d'au moins 10 %, plus avantageusement d'au moins 15 % et le plus avantageusement d'au moins 20 %, et jusqu'au plus 70 %, avantageusement au plus 50 % en poids, et (E1) en une quantité d'au plus 95 %, avantageusement d'au plus 90 %, plus avantageusement d'au plus 85 % et le plus avantageusement d'au plus 80 %, et d'au moins 30 %, avantageusement d'au moins 50 %, tous les pourcentages étant en poids.

**10.** Liant d'asphalte, comprenant une composition suivant l'une quelconque des revendications 1 à 8.

**11.** Asphalte de mélange à chaud comprenant 2 à 8 parties en poids du liant d'asphalte de la revendication 10, et 98 à 92 parties en poids de matière d'agrégat.

**12.** Asphalte de mélange à chaud suivant la revendication 11, dans lequel la matière d'agrégat est une matière d'agrégat à granulométrie discontinue, telle qu'une matière d'agrégat à granulométrie ouverte ou à granulométrie dense.

**13.** Pavement comprenant l'asphalte de mélange à chaud compacté suivant la revendication 11 ou 12.

**14.** Composition d'étanchéité bitumineuse comprenant une composition suivant l'une quelconque des revendications 1 à 9.

**15.** Composition d'étanchéité bitumineuse suivant la revendication 14, contenant de 0 à 65 % en poids d'une charge, par rapport à la composition totale.

**16.** Composition suivant la revendication 14, contenant de 0,05 à 0,2 % en poids d'un agent de réticulation, par rapport à la composition bitumineuse totale (avant introduction d'une charge).

**17.** Composition suivant la revendication 14, contenant une ou plusieurs résines d'adhésivité en une quantité de 0 à 25 % en poids de la composition bitumineuse totale (avant introduction d'une charge).

**18.** Membrane d'étanchéité en rouleau se soudant aisément qui comprend un mat de renforcement et la composition bitumineuse de la revendication 14 qui sature et/ou couvre le mat de renforcement.

**19.** Composition de polymère comprenant un copolymère bloc couplé de styrène-butadiène-styrène linéaire avec une grande quantité de copolymère dibloc, avec les caractéristiques suivantes :

une teneur en styrène allant de 25-40 %, avantageusement d'environ 30 % en poids;
un poids moléculaire de dibloc de 180 000-215 000, avantageusement d'environ 200 000;
une teneur en dibloc de 75-85 %, avantageusement de 80 % en poids (ce qui correspond à un rendement de couplage de 15-25, avantageusement de 20 %);
et comprenant des blocs de poly(styrène) ayant un PM de 30 000 à 40 000 et des blocs de poly(butadiène) ayant un PM de 300 000 à 350 000.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4196115 A
- US 5863971 A
- US 5773496 A
- US 5795929 A
- US 6150439 A
- JP 10212416 B
- JP 1254768 A
- JP 6041439 B
- JP 9012898 B
- JP 3143961 B
- GB 2294935 A
- JP 8165436 B
- JP 8225711 B
- US 6136899 A

- DE 10330820
- US 3265765 A
- US 4405680 A
- US 5719216 A
- US 5854335 A
- US 6133350 A
- US 6120913 A
- US 2004048979 A
- US 5017230 A
- US 5756565 A
- US 5605946 A
- US 4738884 A
- DE 20310484 U

### Non-patent literature cited in the description

- The Influence of Styrene-Butadiene Diblock Copolymer on Styrene-Butadiene-Styrene Triblock Copolymer Viscoelastic Properties and Product Performance. **MCKAY, KEVIN W.** J. appl. polym. sci. 1995, vol. 56, 947-958

- **CORAN, A.Y.** Thermoplastic Elastomers. Hanser Publishers, 1987, 133-161